# EUROPÄISCHE PATENTSCHRIFT

(11) **EP 2 870 332 B1**
(45) Veröffentlichungstag und Bekanntmachung des Hinweises auf die Patenterteilung: **14.09.2016**
(21) Anmeldenummer: 13732421.6
(22) Anmeldetag: 20.06.2013
(51) Int. Cl.: F01N 9/00, F01N 3/20

(54) **VERFAHREN ZUR ZUGABE EINES REDUKTIONSMITTELS IN EINE ABGASBEHANDLUNGSVORRICHTUNG**
METHOD FOR DOSING A REDUCING AGENT IN AN EXHAUST GAS TREATMENT DEVICE
PROCÉDÉ DE DOSAGE D'UN AGENT DE RÉDUCTION DANS UN DISPOSITIF DE TRAITEMENT DES GAZ D'ÉCHAPPEMENT

(30) Priorität: 04.07.2012 DE 102012105952
(43) Veröffentlichungstag der Anmeldung: 13.05.2015
(73) Patentinhaber: Continental Automotive GmbH, 30165 Hannover (DE)
(72) Erfinder: BAUER, Peter, 53721 Siegburg (DE)
(86) Internationale Anmeldenummer: PCT/EP2013/062875
(87) Internationale Veröffentlichungsnummer: WO 2014/005849

(56) Entgegenhaltungen:
- EP-A1- 2 444 612
- EP-A2- 2 187 009
- US-A1- 2009 133 384
- US-A1- 2010 024 389

## Beschreibung

Die Erfindung betrifft ein Verfahren zur Zugabe eines Reduktionsmittels in eine Abgasbehandlungsvorrichtung, wobei das Reduktionsmittel modellbasiert geregelt zugegeben wird.

Zur Reduktion von Stickstoffoxidverbindungen im Abgas von mobilen Verbrennungskraftmaschinen wird das sogenannte SCR-Verfahren (selektive katalytische Reduktion) eingesetzt. Hierbei wird ein Reduktionsmittel, aufweisend Ammoniak bzw. ein Reduktionsmittelvorläufer, der in Ammoniak umsetzbar ist, dem Abgas beigegeben und in einem SCR-Katalysator werden die Stickstoffoxidverbindungen zu Stickstoff und Wasser umgesetzt. Bei diesem Verfahren ist es erwünscht, ein stöchiometrisches Verhältnis zwischen dem Ammoniak und den Stickstoffoxidverbindungen im Abgas einzustellen. Wird zu viel Ammoniak beigegeben bzw. erzeugt, so tritt ein sogenannter Reduktionsmittelschlupf auf, was mit anderen Worten bedeutet, dass das Ammoniak über das Abgas in die Umgebung abgegeben wird und dort bereits in geringen Mengen als Geruchsbelästigung wahrgenommen wird. Außerdem bedingt Reduktionsmittelschlupf auch einen erhöhten Verbrauch an Reduktionsmittel. Bei einer zu geringen bzw. unterstöchiometrischen Zugabe von Ammoniak können die Stickstoffoxidverbindungen im Abgas nicht vollständig umgesetzt werden, wodurch unter Umständen die erforderlichen Abgasnormen nicht (permanent) erfüllt werden können. Problematisch ist jedoch, eine Zugabe zu erreichen, die möglichst exakt stöchiometrisch Ammoniak beigibt, wenn sich die Menge an Stickstoffoxidverbindungen dynamisch aufgrund einer wechselnden Leistungsabgabe einer Verbrennungskraftmaschine, Temperaturänderungen des Abgases und der Verbrennungskraftmaschine und/oder durch die Auswirkungen von weiteren Abgasbehandlungseinheiten sehr stark verändert.

Ein Verfahren zur Zugabe eines Reduktionsmittels in eine Abgasbehandlungsvorrichtung ist beispielsweise aus der EP2444612A1 bekannt.

Hiervon ausgehend liegt der vorliegenden Erfindung die Aufgabe zugrunde, die aus dem Stand der Technik bekannten Probleme zumindest teilweise zu überwinden. Insbesondere soll ein Verfahren angegeben werden, mit dem sicher ein Reduktionsmittelschlupf vermieden und damit auch bei der Abgasbehandlungsvorrichtung auf einen dem SCR-Katalysator nachgeordneten Oxidationskatalysator (Sperrkatalysator) verzichtet werden kann. Das Verfahren soll weiter insbesondere auch für eine Abgasbehandlungsvorrichtung geeignet sein, bei dem der SCR-Katalysator keine (signifikante) Speicherfähigkeit für das Reduktionsmittel aufweist. Gleichzeitig soll das Verfahren eine effiziente und dynamische Umsetzung von im Abgas enthaltenen Stickstoffoxidverbindungen ermöglichen.

Diese Aufgaben werden gelöst durch die Merkmale der unabhängigen Patentansprüche. Vorteilhafte Weiterbildungen sind Gegenstand der abhängigen Patentansprüche.

Die Erfindung betrifft ein Verfahren zur Zugabe eines Reduktionsmittels in eine Abgasbehandlungsvorrichtung mit einer Zufuhrstelle und einem SCR-Katalysator zur Umsetzung von Stickstoffoxidverbindungen im Abgas, aufweisend zumindest die folgenden Schritte:
a) Berechnen folgender Umsatzratenvorgaben, die angeben, welcher Anteil der im Abgas vorhandenen Stickstoffoxidverbindungen durch den SCR-Katalysator umsetzbar ist:
   a.1) eine erste Umsatzratenvorgabe, die aus der Leistungsabgabe einer angeschlossenen Verbrennungskraftmaschine ermittelt wird;
   a.2) eine zweite Umsatzratenvorgabe, die aus dem Massenstrom an Stickstoffoxidverbindungen in dem gereinigten Abgas ermittelt wird; und
   a.3) eine dritte Umsatzratenvorgabe, die aus einem Verhältnis einer Menge von Stickstoffoxidverbindungen vor dem SCR-Katalysator und einer Menge von Stickstoffoxidverbindungen hinter dem SCR-Katalysator ermittelt wird;
b) Auswählen der niedrigsten Umsatzratenvorgabe;
c) Bestimmen der Dosiermenge an Reduktionsmittel mit der ausgewählten Umsatzratenvorgabe;
d) Dosieren der bestimmten Dosiermenge in die Abgasbehandlungsvorrichtung.

Das Reduktionsmittel kann in Form von reinem Ammoniak in die Abgasbehandlungsvorrichtung zugegeben werden, bevorzugt ist jedoch die Zugabe einer wässrigen Harnstoff-Lösung, z. B. erhältlich unter dem Handelsnamen AdBlue® mit einem Harnstoffgehalt von 32,5 %. Die wässrige Harnstoff-Lösung wird thermisch im Abgas und/oder hydrolytisch in einem Hydrolyse-Katalysator zu Ammoniak umgesetzt. In der Abgasbehandlungsvorrichtung wird das zu behandelnde Abgas geführt, wobei dieses eine unzulässig bzw. unerwünscht hohe Menge an Stickstoffoxidverbindungen beinhaltet. Um eine gewünschte Menge Reduktionsmittel exakt zudosieren zu können, wird hier die Dosiermenge basierend auf mehreren Umsatzratenvorgaben bestimmt. Die Umsatzrate ist ein prozentualer Wert aus dem Verhältnis von Stickstoffoxidverbindungen, die zu Stickstoff und Wasser umgesetzt wurden, zu der insgesamt vorhandenen Menge an Stickstoffoxiden im Abgas. Die insgesamt vorhandene Menge an Stickstoffoxiden kann dabei messtechnisch, z. B. mit einer Stickstoffoxidsonde, und/oder modellbasiert z. B. mittels Messwerten von der abgaserzeugenden Verbrennungskraftmaschine errechnet werden, wobei der Wert bevorzugt messtechnisch ermittelt wird. Die Menge an umgesetztem Stickstoffoxid wird ebenfalls messtechnisch und/oder modellbasiert ermittelt. Bevorzugt wird die umgesetzte Menge an Stickstoffoxiden modellbasiert ermittelt.

Gemäß dem hier vorgeschlagenen Verfahren wird in Schritt b) aus einer Mehrzahl von Umsatzratenvorgaben (Maß für die mit dem dosierten Reduktionsmittel aktuell erreichbare Umsetzung von Stickstoffoxiden) die niedrigste ausgewählt. Es wird also eine Umsatzratenvorgabe ausgewählt, die einen geringeren Umsatz von Stickstoffoxiden bedeutet. Dies wird deshalb so gewählt, weil vermieden werden soll, dass Schlupf auftritt und Ammoniak aus dem Abgassystem austritt. Werden verschiedene Umsatzratenvorgaben berechnet, die jeweils auf verschiedenen Messwerten und Modellen beruhen, so ist die Umsatzratenvorgabe, die den niedrigsten Wert ergibt, mit hoher Sicherheit so gewählt, dass kein Reduktionsmittelschlupf auftritt. Das bedeutet insbesondere, dass die Umsatzratenvorgabe ausgewählt wird, die die geringste Dosiermenge zur Folge hat.

Gemäß Schritt a.1) wird eine erste Umsatzratenvorgabe berechnet, die sich auf die Leistungsabgabe der angeschlossenen Verbrennungskraftmaschine in den gereinigten Abgasen bezieht. Diese erste Umsatzratenvorgabe kann eine Massevorgabe, eine Volumenvorgabe bei einer (im Mittel) vorliegenden Abgastemperatur, und/oder eine Normvolumenvorgabe (unter Normbedingungen: 15 °C bzw. 0 °C, 1013,25 hPa, 0 % relative Luftfeuchtigkeit) an Stickstoffoxidverbindungen im Abgas sein. Die Leistungsabgabe der Verbrennungskraftmaschine zum Zeitpunkt der Berechnung der ersten Umsatzratenvorgabe gemäß Schritt a.1) wird insbesondere von der Motorsteuerung bzw. den Motormessungen ermittelt.

Beispielsweise kann die erste Umsatzratenvorgabe so festgelegt sein, dass (aktuell) pro Kilowattstunde abgegebener Energie der Verbrennungskraftmaschine eine vorgegebene maximale Stickstoffoxidemission eingehalten wird. Die zugrunde liegende vorgegebene Stickstoffoxidemission kann auf die von der Verbrennungskraftmaschine abgegebene mechanische Energie oder insgesamt abgegebene Energie (mechanische Energie und thermische Energie) bezogen sein. Bei einem Bezug auf die insgesamt abgegebene Energie kann beispielsweise pro Kilowattstunde abgegebener Gesamtleistung eine von 182 mg erlaubt sein. Dies entspricht einem Massenstrom von ca. 3 mg pro Minute pro Kilowatt. Bei einem Bezug auf die von der Verbrennungskraftmaschine abgegebene mechanische Energie und einem angenommenen Wirkungsgrad von 38 Prozent kann beispielsweise pro Kilowattstunde eine Stickstoffoxidmenge von 478 mg erlaubt sein. Dies entspricht einem Massenstrom von ca. 8 mg pro Minute pro Kilowatt. Im Rahmen der ersten Umsatzratenvorgabe ist dann vorgegeben, um wieviel Prozent die Emissionen der Verbrennungskraftmaschine reduziert werden müssen, damit diese Stickstoffoxidemissionen erreicht werden.

Gemäß Schritt a.2) wird eine zweite Umsatzratenvorgabe für den Massenstrom an Stickstoffoxidverbindungen in dem gereinigten Abgas berechnet. Mit den gereinigten Abgasen werden die Abgase bezeichnet, die den SCR-Katalysator durchströmt haben bzw. noch weitere Abgasbehandlungseinheiten in der Abgasbehandlungsvorrichtung durchströmt haben. Die zweite Umsatzratenvorgabe wird also basierend auf einem Zielwert für die Masse an Stickstoffoxidverbindungen im Abgas nach dem SCR-Katalysator bzw. in dem aus der Abgasbehandlungsvorrichtung austretenden Abgas berechnet. Diese zweite Umsatzratenvorgabe kann aufgrund von Messungen mit einer Sonde und/oder aufgrund von modellbasierten Berechnungen festgelegt werden. Insbesondere eignet sich dafür ein Oxidationskatalysatormodell, wonach die Menge an Stickstoffdioxid und anderen Stickstoffoxidverbindungen berechnet wird. Bevorzugt wird zur Berechnung der zweiten Umsatzratenvorgabe der Zielwert für die Masse an Stickstoffoxidverbindungen im Abgas mit der Masse der tatsächlich vorliegenden Stickstoffoxidverbindungen im Abgas vor dem SCR-Katalysator in ein Verhältnis gesetzt. Diese Masse kann gemessen oder, wie weiter oben beschrieben, modelbasiert berechnet werden. Es ist auch möglich, dass zur Bestimmung der Masse eine Messung und eine modellbasierte Berechnung miteinander kombiniert werden.

Beispielsweise kann die zweite Umsatzratenvorgabe so festgelegt sein, dass ein maximaler Massenstrom von 1,92 g Stickstoffoxidverbindungen pro Betriebsstunde der Verbrennungskraftmaschine auftritt. Im Rahmen der ersten Umsatzratenvorgabe kann dann vorgegeben sein, um wieviel Prozent die Emissionen der Verbrennungskraftmaschine reduziert werden müssen, damit diese Stickstoffoxidemissionen erreicht werden.

Gemäß der Berechnung der dritten Umsatzratenvorgabe in Schritt a.3) wird bestimmt, welche Menge an Stickstoffoxidverbindungen im Abgas durch die Behandlung im SCR-Katalysator bezogen auf die Menge im ungereinigten Abgas reduziert werden soll. Dafür kann insbesondere ein SCR-Katalysator-Modell zugrunde gelegt werden. Die dritte Umsatzratenvorgabe wird beispielsweise anhand von Betriebsparametern des SCR-Katalysators modellbasiert festgelegt. Es wird hierbei insbesondere bevorzugt welche prozentuale Reduktion von Stickstoffoxidverbindungen in dem SCR-Katalysator bei den vorliegenden Betriebsbedingungen erfolgen kann. Hierbei kann auch eine Alterung des SCR-Katalysators mit berücksichtigt werden.

Mit dem Begriff "ungereinigtem Abgas" kann im Zusammenhang mit der dritten Umsatzratenvorgabe insbesondere auch das Abgas gemeint sein, welches die Abgasanlage ohne die Behandlung mit dem SCR-Katalysator verlassen würde. Beispielsweise kann die dritte Umsatzratenvorgabe so festgelegt sein, dass die Stickstoffoxidverbindungen gegenüber dem unbehandelten/ungereinigten Abgas um 68 % reduziert werden.

Nach der Berechnung dieser drei (aktuellen) Zielwerte für Umsatzratenvorgaben gemäß den Schritten a.1), a.2) und a.3) stehen drei, in der Regel unterschiedliche, Ergebnis-Werte zur Verfügung. In Schritt b) wird nun die niedrigste Umsatzrate ausgewählt. Hierbei kann ein Modell zugrunde gelegt werden und/oder eine sogenannte "Look up"-Tabelle verwendet werden. In der "Look-up"-Tabelle sind eine Reihe von Eingangswerten jeweils Ausgangswerte zugeordnet, die auf Messwerten empirischer Versuche beruhen. In einem Modell hingegen werden die chemischen und physikalischen Vorgänge innerhalb des Modellrahmens regelungstechnisch nachgebildet und ein Eingangswert in einen Ausgangswert umgerechnet. In einem komplexen Modell können (ergänzend) auch eine Mehrzahl von "Look up"-Tabellen vorgesehen sein.

Durch die Auswahl der niedrigsten Umsatzratenvorgabe wird sichergestellt, dass kein Schlupf von Reduktionsmittel bzw. Ammoniak auftritt. Auf der anderen Seite wird durch die Auswahl der angegebenen Umsatzratenvorgaben eine sehr gute Abschätzung der stöchiometrisch benötigten Menge an Reduktionsmittel in sehr kurzer Zeit ermittelbar.

Mit Hilfe der final ausgewählten (geringsten) Umsatzratenvorgabe wird in Schritt c) eine (tatsächlich) zuzuführende Menge an Reduktionsmittel berechnet. Dies geschieht vorzugsweise unter Berücksichtigung einer Reihe von Abgasparametern wie insbesondere zumindest einem der folgenden Parameter: Abgasmassenstrom; Abgastemperatur; Drehzahl der Verbrennungskraftmaschine; und Last der Verbrennungskraftmaschine, wobei diese Parameter zumindest teilweise auch in den Schritten a.1) bis a.3) berücksichtigt werden können.

Abschließend wird in Schritt d) die berechnete Menge an Reduktionsmittel in die Abgasbehandlungsvorrichtung eindosiert. Die Zugabe erfolgt dabei meist in Strömungsrichtung des Abgases (unmittelbar) vor dem SCR-Katalysator.

In einer vorteilhaften Ausführungsform des Verfahrens werden zur Berechnung der Umsatzratenvorgaben in den Schritten a.1) bis a.3) zumindest folgende Parameter verwendet:
- zumindest eine Temperatur des SCR-Katalysators;
- zumindest eine Stickstoffkonzentration im Abgas;
- die Drehzahl der Verbrennungskraftmaschine; und
- das Drehmoment der Verbrennungskraftmaschine.

Durch die Messung/Berechnung der (aktuellen) Temperatur des SCR-Katalysators wird es möglich, die aktuellen Umsetzungseigenschaften bzw. die aktuelle Speicherfähigkeit des SCR-Katalysators für Ammoniak zu bestimmen. Hierzu kann eine "Look up"-Tabelle basierend auf Versuchsergebnissen und/oder ein Modell der chemischen und physikalischen Abläufe eingesetzt werden. Die "Look up"-Tabelle entspricht einem Kennfeld, in dem für verschiedene Temperaturen des SCR-Katalysators Parameter für die Umsetzungseigenschaften und/oder die Speicherfähigkeit des SCR-Katalysators hinterlegt sind.

Durch die Messung/Berechnung einer Stickstoffkonzentration im Abgas hinter dem SCR-Katalysator wird eine direkte Messung der Umsetzung möglich, insbesondere sofern vor der SCR-Behandlung und nach der SCR-Behandlung die Stickstoffkonzentration im Abgas ermittelt wird.

Über die Drehzahl der Verbrennungskraftmaschine kann die Gesamtausstoßmenge an Abgas ermittelt werden und damit auch die Raumgeschwindigkeit durch den SCR-Katalysator, welche die Umsetzungsrate erheblich beeinflusst. Durch die Berücksichtigung des Drehmoments der Verbrennungskraftmaschine kann auf die Druckverhältnisse und Temperaturverhältnisse in der Brennkammer der Verbrennungskraftmaschine geschlossen werden, wodurch ein Prozentsatz an Stickstoffoxidverbindungen ermittelt werden kann.

Insbesondere die Verwendung einer Kombination mehrerer der genannten Parameter kann dazu genutzt werden, Quereinflüsse bestimmter Parameter herauszurechnen bzw. zu eliminieren. Durch die Verwendung dieser Parameter ist es demnach möglich, mit sehr kurzen Messzeiten / Berechnungszeiten eine exakte Menge an notwendigem Ammoniak bzw. Reduktionsmittel zu ermitteln.

In einer vorteilhaften Ausführungsform des Verfahrens wird die Bestimmung der Dosiermenge in Schritt c) mit einem Regler durchgeführt, der einen integrierenden Regelanteil und einen proportionalen Regelanteil hat, wobei die durch den SCR-Katalysator aktuell vorliegende Umsetzungsrate mit der ausgewählten Umsetzungsratenvorgabe verglichen wird und eine Abweichung bestimmt wird, die für die Bestimmung der Dosiermenge verwendet wird.

Die Umsatzratenvorgabe ist insbesondere ein modellbasierter Sollwert/Zielwert. Die aktuell vorliegende Umsetzungsrate hingegen ist ein konkret ermittelbarer, im Abgas vorliegender Parameter, der sich aus einer Messung, z. B. des Stickstoffs vor dem SCR-Katalysator und hinter dem SCR-Katalysator, ergibt. Hierbei können aber auch Modellwerte miteinbezogen werden, insbesondere wenn die Messung durch Querempfindlichkeiten Messfehler aufweisen kann.

Nach dem Auswählen der niedrigsten Umsatzratenvorgabe wird gemäß dieser Ausführungsvariante die Umsatzratenvorgabe mit der aktuell vorliegenden Umsetzungsrate verglichen und entsprechend eine Abweichung festgestellt. Dies kann regelungstechnisch z. B. durch einen Additions- bzw. Subtraktions-Operator durchgeführt werden. Aufgrund der Abweichung wird eine Dosiermenge von Reduktionsmittel bestimmt, welche sich zusammensetzt aus z. B. der ausgewählten Umsetzungsrate plus bzw. minus dem Abweichungsanteil. Die Dosiermenge kann aber auch aus der Abweichung und der vorherigen Umsetzungsrate bzw. Umsatzratenvorgabe in einem vorhergehenden Berechnungsschritt des Verfahrens bestimmt werden. Durch die Berücksichtigung der Abweichung mit Hilfe eines Reglers wird eine besonders gute Anpassung der Dosiermenge auch an schnell wechselnde dynamische Veränderungen der Menge an Stickstoffoxidverbindungen bzw. an Betriebsbedingungen der Verbrennungskraftmaschine und der Abgasbehandlungsvorrichtung möglich.

Ein Regler mit einem integrierenden Anteil hat besondere Eigenschaften, die für die Berechnung der Dosiermenge in Schritt c) besonders vorteilhaft sind. Der integrierende Regelanteil, welcher die vorhergehenden Messeingänge jeweils aufintegriert, entwickelt eine Art "Gedächtnis" und erreicht damit eine angepasste Ausgangsgröße und dämpft Regelspitzen heraus, die durch den proportionalen Regelanteil allein entstehen können. Bei dem Regler sind insbesondere keine differenzierenden Regelanteile enthalten. Es ist möglich, mit einem solchen Regler innerhalb von kurzer Zeit den Wunschwert zu erreichen, was durch einen differenzierenden Anteil verhindert würde. Aufgrund der Auswahl der niedrigsten Umsatzratenvorgabe wird wirkungsvoll vermieden, dass die Ausgangsgröße eines solchen Reglers über die Sollausgangsgröße hinausläuft.

In einer vorteilhaften Ausführungsform des Verfahrens wird die aktuell vorliegende Umsetzungsrate aus einer Differenz eines zweiten Signals eines zweiten Stickstoffoxidsensors hinter dem SCR-Katalysator und eines ersten Signals eines ersten Stickstoffoxidsensors vor dem SCR-Katalysator berechnet, wobei das erste Signal um ein erstes Zeitintervall vor dem zweiten Signal bestimmt wird und das erste Zeitintervall einer Strömungszeit des Abgases von dem ersten Stickstoffoxidsensor zu dem zweiten Stickstoffoxidsensor entspricht.

Durch die Berechnung dieser Differenz zwischen den zwei Signalen bzw. Messungen der Stickstoffoxidsensoren kann direkt die aktuelle Umsetzungsrate ermittelt werden. Durch die Messung des ersten Signals um das erste Zeitintervall zeitlich versetzt vor der Messung, wird die vorliegende Umsetzungsrate auch bei besonders dynamischen Betriebsbedingungen des SCR-Katalysators zuverlässig bestimmt. Wenn man sich das Abgas, welches die Abgasbehandlungsvorrichtung passiert, als Abgassäule vorstellt, welche ausgehend von der Verbrennungskraftmaschine kontinuierlich durch die Abgasbehandlungsvorrichtung ausgeschoben wird, wird es durch das erste Zeitintervall möglich, mit dem ersten Signal und dem zweiten Signal immer genau denselben Abschnitt dieser Abgassäule zu erfassen. Es kann daher durch den Vergleich des ersten Signals und des zweiten Signals die Umsetzungsrate für diesen Abschnitt der Abgassäule bestimmt werden. Das erste Zeitintervall wird vorzugsweise variabel bestimmt. Das erste Zeitintervall wird dabei entsprechend einer Laufzeit des Abgases vom ersten Stickstoffoxidsensor zu dem zweiten Stickstoffoxidsensors bestimmt. Dies geschieht vorzugsweise durch eine Berechnung in einer Kontrolleinheit, wobei vorzugsweise zumindest einer der folgenden Paramater berücksichtigt wird:
- Abgasgeschwindigkeit,
- Drehzahl einer Verbrennungskraftmaschine,
- Drehmoment einer Verbrennungskraftmaschine,
- Ansaugluftmassenstrom einer Verbrennungskraftmaschine,
- sonstige Motorkennwerte, und
- Parameter aus dem Modell des SCR-Katalysators.

In einer vorteilhaften Ausführungsform des Verfahrens ist der Regler in einem statischen Modus und einem dynamischen Modus betreibbar, und für Schritt c) wird ein Gradient einer Stickstoffoxidmenge im Abgas vor dem SCR-Katalysator berechnet, wobei der Regler in dem dynamischen Modus betrieben wird, wenn der Gradient größer ist als ein Schwellwert, und der Regler im statischen Modus betrieben wird, wenn der Gradient kleiner oder gleich dem Schwellwert ist, wobei die in Schritt b) ausgewählte Umsatzratenvorgabe nur im dynamischen Modus verwendet wird und im statischen Modus für die Berechnung der Dosiermenge in Schritt c) eine vollständige Umsetzung der Stickstoffoxidverbindungen im Abgas angestrebt wird.

In einem statischen Modus wird der Regler konstant betrieben und ermöglicht eine langsame aber sehr genaue Anpassung der Dosiermenge. Es wird versucht, anhand einer von Messungen im Abgas die Menge an Stickstoffoxidverbindungen im Abgas zu erkennen und vollständig umzusetzen.

In dem dynamischen Modus ist der Regler fähig, besonders schnell und effektiv auf Veränderungen von Betriebsparametern der Verbrennungskraftmaschine und der Abgasbehandlungsvorrichtung zu reagieren. Dafür ist die Anpassung weniger genau. Gleichzeitig soll Ammoniakschlupf vermieden werden.

Die Unterscheidung des dynamischen Modus und des stationären Modus kann anhand von Grenzwerten für bestimmte Betriebsparameter des Kraftfahrzeuges getroffen werden. Beispielsweise können ein Gradient der Motordrehzahl und/oder ein Gradient der Motorlast für die Unterscheidung genutzt werden. Mit einem "Gradienten" ist hier die Betrachtung des Parameters über die Zeit gemeint. Wenn dieser Gradient bzw. diese Gradienten einen vorgegebenen Grenzwert überschreiten, wird der dynamische Modus aktiviert. Wenn die Gradienten oder der Gradient den Grenzwert unterschreiten, wird der statische Modus aktiviert. Besonders bevorzugt wird die Unterscheidung zwischen dynamischem und statischem mittels des Gradienten des Stickstoffoxid-Massenstromes durchgeführt. Befindet sich dieser Gradient oberhalb eines Grenzwertes, ist der dynamische Modus aktiviert. Befindet sich dieser Gradient unterhalb dieses Grenzwertes wird der statische Modus aktiviert. Die Gradienten des Stickstoffoxid-Massenstroms, der Gradient der Last der Verbrennungskraftmaschine und/oder der Gradient der Drehzahl können auch gemeinsam in einem Kennfeld zur Unterscheidung des statischen Modus und des dynamischen Modus miteinander kombiniert berücksichtigt werden.

In den Schritten a.1), a.2) und a.3) werden Umsatzratenvorgaben berechnet, die zwar keine vollständige Umsetzung der Stickstoffoxidverbindungen im Abgas ermöglichen, aber eine hohe Sicherheit aufweisen, dass an dem SCR-Katalysator kein Schlupf von Ammoniak auftritt, sondern dass Ammoniak vollständig zur Reduktion von Stickstoffoxidverbindungen genutzt wird. Daher ist es besonders vorteilhaft, die in Schritt b) ausgewählte Umsetzungsratenvorgabe für das dynamische Modell zu verwenden.

Durch die Unterscheidung in ein statisches und in ein dynamisches Modell wird über den gesamten Betrieb einer Verbrennungskraftmaschine gemittelt (während statischer und während dynamischer Betriebszustände), um eine besonders gute Umsetzung von Ammoniak zu erreichen und gleichzeitig eine besonders hohe Sicherheit gegenüber Ammoniakschlupf zu erhalten.

Der Gradient der Stickstoffoxidmenge ist die Steigung bzw. das Abfallen der Stickstoffoxidmenge über einen beobachteten Zeitraum. Wird der Gradient größer, so ist auf eine rapide Änderung der Stickstoffoxidmenge rückzuschließen und möglicherweise liegt aufgrund einer fehlerhaften Messgröße ein Regelfehler vor. Solange der Gradient unterhalb eines festgesetzten Schwellwerts liegt, arbeitet der Regler in einem statischen Modus. Durch diese Festsetzung des Schwellwerts der Änderung der Stickstoffoxidmenge im Abgas vor dem SCR-Katalysator wird es möglich, auf einen im Normalfall ausreichend genau arbeitenden Regler mit simplem Algorithmus zurückzugreifen und lediglich bei starken Änderungen in den aufwendigeren dynamischen Modus umzuschalten.

In einer vorteilhaften Ausführungsform des Verfahrens wird der integrierende Regelanteil auf Null (0) zurückgesetzt, wenn eine an die Abgasbehandlungsvorrichtung angeschlossene Verbrennungskraftmaschine einen Lastwechsel hat. Mit einem Lastwechsel ist hier eine schlagartige, kurzfristige Veränderung des Lastzustandes der Verbrennungskraftmaschine bzw. der lastabhängigen Betriebsbedingungen der Verbrennungskraftmaschine gemeint, insbesondere ein Wechsel von einem Lastzustand von beispielsweise mehr als 50 % einer Maximallast der Verbrennungskraftmaschine in den Leerlauf.

Durch einen solchen Lastwechsel an der Verbrennungskraftmaschine können stark variierende Umsetzungsverhältnisse für Stickstoffoxidverbindungen auftreten. Um hier bei einer starken Änderung keine negativen Auswirkungen durch die dämpfende Wirkung des integrierenden Regelanteils, dem Gedächtnis, zu erhalten, wird bei einem solchen Lastwechsel der integrierende Regelanteil zu Null gesetzt. In der Folge dieser einfachen Maßnahme passt sich der Regler schnell und wirkungsvoll an die neuen Verhältnisse an und baut einen integrierenden Regelanteil auf, der für den neu vorliegenden Lastzustand angepasst ist. Hierdurch wird vermieden, dass beim Lastwechselübergang Regelfehler entstehen und bei Lastwechseln in schneller Folge, wie z. B. bei einem Ampelstopp, den Regelfehler durch die verschiedenen Lastzustände sozusagen als Ballast hindurch zu schleppen. Ein sehr hoher integrierender Regleranteil, der aufgrund von vorliegenden Betriebsbedingungen einer Verbrennungskraftmaschine (eines vorliegenden Lastzustandes) aufgebaut wurde, ist bei einem veränderten Lastzustand der Verbrennungskraftmaschine gegebenenfalls nicht mehr passend und kann sogar zu einer starken Fehlsteuerung der Dosiermenge des Reduktionsmittels führen.

Daher ist es vorteilhaft, in einer solchen Situation den integrierenden Anteil wieder auf Null zu setzen.

In einer vorteilhaften Ausführungsform des Verfahrens weist der SCR-Katalysator eine Beschichtung auf, die unter üblichen Betriebsbedingungen des SCR-Katalysators keine Speicherfähigkeit für Reduktionsmittel aufweist und kein zusätzlicher Speicherkatalysator für Reduktionsmittel in der Abgasbehandlungsvorrichtung vorhanden ist.

Mit einer Speicherfähigkeit für Reduktionsmittel ist insbesondere eine Speicherfähigkeit für Ammoniak gemeint. Eine Speicherfähigkeit für Ammoniak kann insbesondere durch geeignete Beschichtungsanteile im SCR-Katalysator erreicht werden. Der SCR-Katalysator in der hier vorliegenden Abgasbehandlungsvorrichtung weist vorzugsweise keine Beschichtungsbestandteile auf, die eine Ammoniakspeicherung ermöglichen. Vorzugsweise sind in der Abgasbehandlungsvorrichtung auch kein weiterer Katalysator und kein weiteres Bauteil vorgesehen, welches eine Speicherung von Ammoniak ermöglicht.

Mit dem vorgeschlagenen Verfahren ist es möglich, einen SCR-Katalysator ohne Speicherfähigkeit oder einer nur sehr geringen Speicherfähigkeit für Reduktionsmittel bzw. Ammoniak zu verwenden. Ein solcher Katalysator weist beispielsweise eine Beschichtung auf, die Vanadiumpentoxid und keine Zeolithe umfasst. Auch bei einer solchen Abgasbehandlungseinrichtung ist es hiermit möglich, sehr exakt und in Echtzeit so viel Reduktionsmittel zuzudosieren, dass einerseits eine möglichst weitgehende Umsetzung der Stickstoffoxide erfolgt und gleichzeitig ein Reduktionsmittelschlupf vermieden wird.

Es sei aber an dieser Stelle darauf hingewiesen, dass das Verfahren ebenfalls für Abgasbehandlungseinrichtungen geeignet ist, die einen speicherfähigen SCR-Katalysator verwenden. Hierbei ist es ggf. notwendig, als weitere Eingangsgröße ein Speichermodell oder eine entsprechende "Look up"-Tabelle (ein entsprechendes Kennfeld) zu verwenden.

Gemäß einem weiteren Aspekt der Erfindung wird eine Abgasbehandlungsvorrichtung zur Reinigung der Abgase einer Verbrennungskraftmaschine vorgeschlagen, welche zumindest die folgenden Komponenten aufweist:
- einen SCR-Katalysator zur Durchführung einer selektiven katalytischen Reduktion von Stickstoffoxidverbindungen im Abgas;
- eine Zufuhrstelle zur Zufuhr von Reduktionsmittel, welche in Abgasströmungsrichtung vor dem SCR-Katalysator angeordnet ist;
- einen zweiten Stickstoffoxidsensor in Abgasströmungsrichtung hinter dem SCR-Katalysator; und
- eine Kontrolleinheit, die dazu eingerichtet ist, eine Zugabe von Reduktionsmittel an der Zufuhrstelle zu regeln,
wobei die Kontrolleinheit zur Durchführung des beschriebenen Verfahrens eingerichtet ist.

Die Abgasbehandlungsvorrichtung weist einen SCR-Katalysator auf, in dem Stickstoffoxidverbindungen zu Stickstoff und Wasser reduziert werden. Hierzu weist der SCR-Katalysator in der Regel eine Beschichtung auf. Vorzugsweise ist der SCR-Katalysator mit einer Beschichtung beschichtet, die eine Reduktion von Stickstoffoxidverbindungen mit Ammoniak begünstigt, die aber keine oder nur eine sehr geringe Speicherfähigkeit für Ammoniak hat. Beispielsweise weist die Beschichtung Vanadiumpentoxid auf und es sind keine Zeolithe in der Beschichtung enthalten.

In einer alternativen Ausführungsform kann der SCR-Katalysator aber auch eine Beschichtung aufweisen, die in der Lage ist, Ammoniak aufzunehmen, um dieses beim Vorliegen von Stickstoffoxidverbindungen für die selektive katalytische Reduktion wieder abzugeben und somit Speichereigenschaften aufweist. Dies wird beispielsweise durch die Verwendung von Zeolithen erreicht.

Vor dem SCR-Katalysator ist eine Zufuhrstelle für Reduktionsmittel bzw. Ammoniak angeordnet, so dass z. B. über einen Injektor eine Harnstoff-Wasser-Lösung zerstäubt dem Abgas beigegeben wird und dort thermolytisch und/oder hydrolytisch in Ammoniak umgewandelt wird, welches dann für die SCR-Reaktion im SCR-Katalysator zur Verfügung steht. Das Abgas dient dabei als Transportmittel und aufgrund seiner Temperatur und chemischen Zusammensetzung als Umwandlungsvermittler der Harnstoff-Wasser-Lösung in Ammoniak.

Weiterhin weist die Abgasbehandlungsvorrichtung einen zweiten Stickstoffoxidsensor in Abgasströmungsrichtung hinter dem SCR-Katalysator auf. Dieser ist insbesondere dazu eingerichtet, Messwerte eines ersten Stickstoffoxidsensors in Abgasströmungsrichtung vor dem SCR-Katalysator oder Modellwerte eines Stickstoffoxidverbindungen-Modell, z. B. basierend auf Motorkennwerten und Abgasmessungen oder Abgasmodellen. Ein (optionaler) erster Stickstoffoxidsensor kann in Abgasströmungsrichtung vor dem SCR-Katalysator vorgesehen sein.

Darüber hinaus ist eine Kontrolleinheit vorgesehen, die dazu konzipiert und eingerichtet ist, eine Zugabe von Reduktionsmittel zu regeln. Eine solche Kontrolleinheit umfasst z. B. einen Prozessor, in dem die Berechnungen gemäß einem Regelalgorithmus stattfinden und Ausgangssignale für die Zugabe von Reduktionsmittel ausgegeben werden. Die Kontrolleinheit kann einen Injektor für das Reduktionsmittel vorzugsweise direkt steuern und/oder auf eine eigene Steuerungseinheit des Injektors zugegreifen. Eingangsgrößen der Kontrolleinheit können dabei Motorkennwerte, Abgaskennwerte, Lambdasondenwerte und/oder Stickstoffoxidsensorwerte sein. Die Eingangsgrößen selbst können auch bereits indirekte Berechnungswerte sein, die basierend auf Messwerten durch Modelle oder "Look up"-Tabellen (Kennfeldern) ermittelt worden sind. Bevorzugt beinhaltet die Kontrolleinheit integral die Berechnungsmodelle für die Steuerung der Abgasvorrichtung und insbesondere für die berücksichtigten Werte der angeschlossenen Verbrennungskraftmaschine.

Für eine Kontrolleinheit zur Durchführung des beschriebenen Verfahrens wird als vorteilhaft angesehen, dass sie in Echtzeit die schnelle Abfolge verschiedener Abgaszusammensetzungen und Temperaturen nachregeln kann, weil keine oder nur eine geringe Pufferwirkung durch einen Speicherkatalysator vorhanden ist. Zu diesem Zweck ist es sinnvoll, die Berechnung der Ausgangsgröße über einen Proportionalintegralregler laufen zu lassen, weil dieser eine besonders schnelle Angleichung an die notwendige Messgröße erzielen kann und zugleich innerhalb eines Lastzustands den Regelwert durch den Integralanteil stabil hält. Damit es nicht zu einem Überschießen kommt, ist es vorteilhaft, auf Basis mehrerer Berechnungen mit unterschiedlicher Eingangsgrößenbasis jeweils die niedrigste Ausgangsgröße auszuwählen. Insbesondere bei Lastwechseln ist es dabei aber auch vorteilhaft, den Integralanteil zurück auf null zu setzen, um wieder eine schnelle Angleichung an die neue Lastsituation erreichen zu können.

Im Rahmen der Erfindung ist auch ein Kraftfahrzeug beschrieben, welches eine Verbrennungskraftmaschine und eine Abgasbehandlungsvorrichtung obiger Beschreibung zur Reinigung der Abgase der Verbrennungskraftmaschine aufweist.

Kraftfahrzeuge müssen in unterschiedlichsten Situationen unterschiedlichste Leistungen von der Verbrennungskraftmaschine abrufen. Hierdurch läuft die Verbrennungskraftmaschine nur selten in einem optimalen Zustand, auf welchen die Abgasbehandlungsvorrichtung eingestellt werden kann. Hierzu ist es notwendig, ein schnelles und effektives Regelungssystem zur selektiven Reduktion von Stickstoffoxidverbindungen einzurichten, welches auf unterschiedlichste Lastzustände und vor allem schnelle Lastenwechsel eingerichtet ist. Mit der Verwendung der Abgasbehandlungsvorrichtung und dem oben beschriebenen Verfahren ist eine besonders effiziente und zuverlässige Anpassung der Reduktionsmittelzugabe an die jeweils notwendige Umsetzungsrate möglich.

Die in den Patentansprüchen einzeln aufgeführten Merkmale sind in beliebiger, technologisch sinnvoller, Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: ein Schaltschema des Verfahrens gemäß obiger Beschreibung;
- Fig. 2:: einen alternativen Ausschnitt des Schaltschemas in Fig. 1;
- Fig. 3:: ein Schaltbild einer möglichen Referenzwertbildung; und
- Fig. 4:: ein Kraftfahrzeug mit der Abgasbehandlungsvorrichtung.

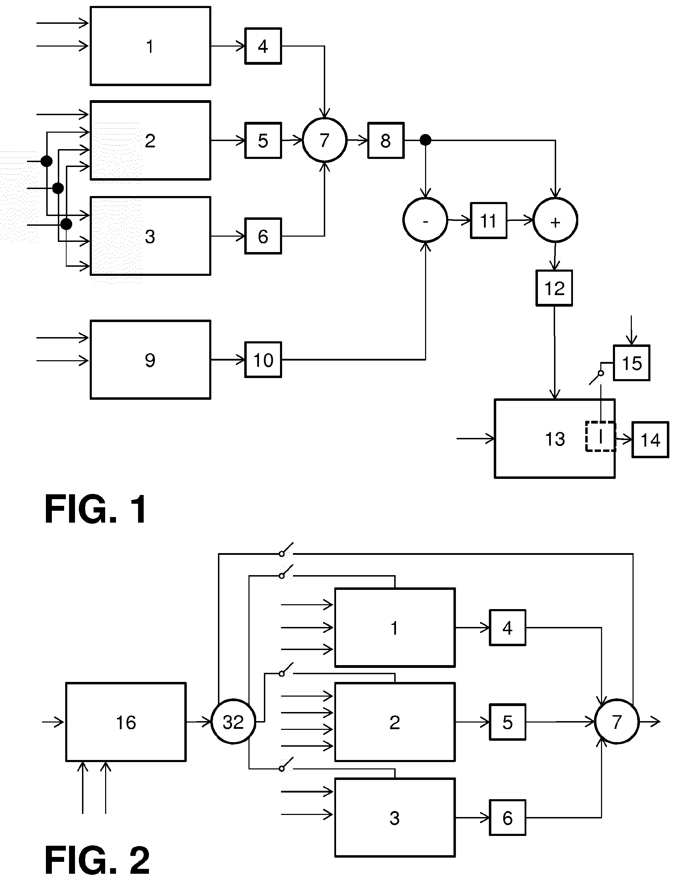

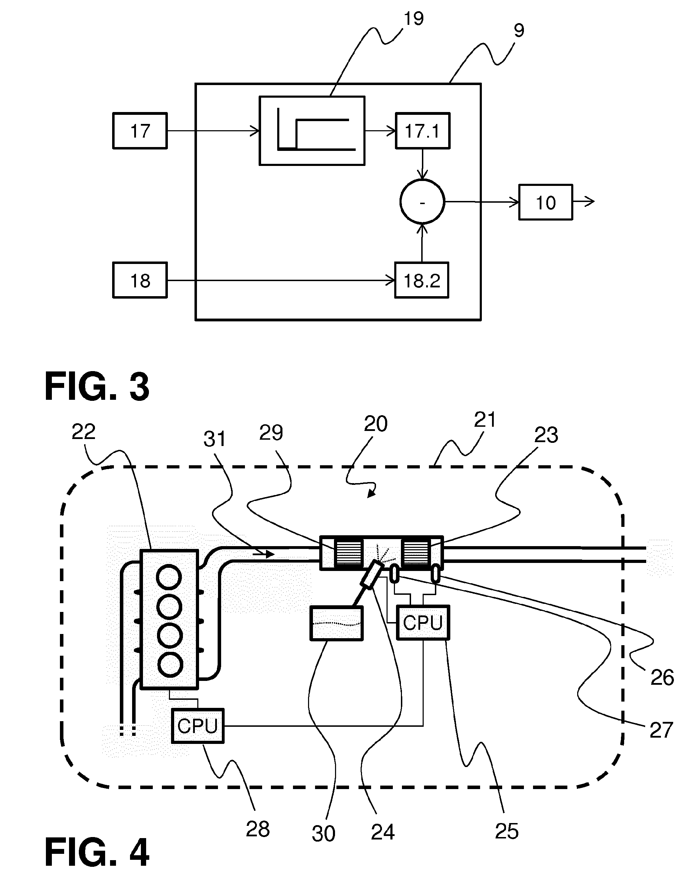

Fig. 1 zeigt ein beispielhaftes Schaltbild des oben beschriebenen Verfahrens. In dem Funktionsfeld 1 wird auf Basis von Eingangswerten die erste Umsatzratenvorgabe 4 bezogen auf die Leistungsabgabe berechnet. Im Funktionsfeld 2 wird ausgehend von Eingangsgrößen die zweite Umsatzratenvorgabe 5 für den Massenstrom an Stickstoffoxidverbindungen im gereinigten Abgas berechnet. Im Funktionsfeld 3 wird die dritte Umsatzratenvorgabe 6 berechnet, um die die Stickstoffverbindungen im Abgas reduziert werden sollen. Die Eingangsgrößen für die Funktionsfelder 1 bis 3 sind hier nur schematisch und beispielhaft gezeigt. Für das Funktionsfeld 1 könnten z. B. die Geschwindigkeit der Verbrennungskraftmaschine und das Drehmoment der Verbrennungskraftmaschine Eingangsgrößen sein. Für das Funktionsfeld 3 könnten z. B. die SCR-Katalysatortemperatur und die SCR-Katalysator-Raumgeschwindigkeit Eingangsgrößen sein, wobei diese z. B. auf einem SCR-Katalysatormodell beruhen. Auch für das Funktionsfeld 2 könnten die Modellwerte wie in Funktionsfeld 3 als Eingangsgrößen verwendet werden. Zusätzlich könnte die relative Menge an Stickstoffdioxid stromaufwärts des SCR-Katalysators 23 (vgl. Fig. 4) eine Eingangsgröße sein. Letztere kann wiederum einem Modell, z. B. einem Oxidationskatalysatormodell, entsprechen. Funktionsfeld 2 könnte zudem noch die Eingangsgröße der Stickstoffoxidverbindungsmassenstrom stromaufwärts des SCR-Katalysators 23 (vgl. Fig. 4) verwenden.

Aus den Umsatzratenvorgaben 4 bis 6 wird in dem Minimumoperator 7 die niedrigste Umsatzratenvorgabe ausgewählt. In dem Funktionsfeld 9 wird die aktuell vorliegende Umsetzungsrate 10 berechnet. Diese kann bspw. auf der Stickstoffoxidverbindungskonzentration stromaufwärts des SCR-Katalysators 23 (vgl. Fig. 4) und der Stickstoffoxidverbindungskonzentration stromabwärts des SCR-Katalysators 23 berechnet werden. Die ausgewählte niedrigste Umsatzratenvorgabe bildet mit der aktuell vorliegenden Umsetzungsrate 10 die Abweichung 11. Die Dosiermenge 12 wird aus der ausgewählten niedrigsten Umsatzratenvorgabe und der Abweichung 11 zusammengesetzt, das heißt subtrahiert oder addiert. In dem Funktionsfeld 13, welches bspw. einen Proportionalintegralregler enthält, wird das Dosiersignal 14 berechnet, womit die Dosierung der berechneten Menge am Injektor veranlasst wird. Schematisch dargestellt, hat die Feldfunktion 13 noch einen weiteren Eingang, z. B. Informationen über den Zustand der Zufuhrstelle 24 (vgl. Fig. 4). Ebenfalls schematisch dargestellt ist in dem Funktionsfeld 13 der integrierende Anteil I im gestrichelten Kästchen, welcher aufgrund eines Lastwechselsignals 15 zurück auf null gesetzt werden kann.

In Fig. 2 ist eine alternative Vorbeschaltung der Funktionsfelder 1 bis 3 aus dem Schaltbild in Fig. 1 dargestellt. Hierbei ist ein Funktionsfeld 16 vorgeschaltet, welches aufgrund von Eingangsgrößen (die hier nur beispielhaft und schematisch angedeutet sind) den nachfolgenden Modusoperator 8 dazu veranlasst, vom statischen in den dynamischen Modus des Verfahrens umzuschalten. Die Verschaltung ist hierbei rein schematisch und es sind andere Lösungen möglich, so dass im statischen Modus nur eines der Funktionsfelder 1 bis 3 oder ein alternatives konventionelles Funktionsfeld ausgeführt wird. Im dynamischen Modus sind alle Funktionsfelder und der Minimumoperator 7 geschaltet. Im statischen Modus ist nach diesem Beispiel nur eins der Funktionsfelder geschaltet und der Minimumoperator 7 daher ggf. ausgeschaltet. Es ist aber auch möglich, den Minimumoperator 7 in einen Kanaloperator für einen der Zielwerte 4 bis 6 umzuschalten und die Funktionsfelder 1 bis 3 weiter parallel im dynamischen Betrieb zu betreiben. Die Verschaltung der Funktionsfelder 1 bis 3 erfolgt jeweils mit dem Schaltmittel 32.

In Fig. 3 ist eine mögliche Ausführungsform des Funktionsfelds 9 für die Berechnung der vorliegenden Umsetzungsrate gezeigt, welche gemäß Fig. 1 verschaltet sein kann. Zur Verdeutlichung ist in diesem Beispiel die Eingangsgröße des Funktionsfelds 9 auf das erste Signal 17 des ersten Stickstoffoxidsensors 27 (vgl. Fig. 4) und das zweite Signal 18 des zweiten Stickstoffoxidsensors 26 (vgl. Fig. 4) beschränkt. Das erste Signal 17 wird dabei um ein erstes Zeitintervall 19 verzögert, sodass für den Differenzoperator die Eingangsgrößen 17.1 zu einem ersten Zeitpunkt mit einer Eingangsgröße 18.2 zu einem zweiten Zeitpunkt miteinander verglichen werden und daraus die aktuell vorliegende Umsetzungsrate 10 berechnet wird. Das erste Zeitintervall entspricht dabei der Zeit, die das Abgas für die Strecke von ersten Stickstoffoxidsensor 27 zum zweiten Stickstoffoxidsensor 26 benötigt, sodass der gleiche Abgasabschnitt vor und hinter dem SCR-Katalysator 23 (vgl. Fig. 4) verglichen wird.

In Fig. 4 ist ein Kraftfahrzeug 21 mit einer Abgasbehandlungsvorrichtung 20 und einer Verbrennungskraftmaschine 22 schematisch dargestellt. Die Abgasbehandlungsvorrichtung 20 umfasst in diesem Beispiel einen SCR-Katalysator 23 und einen Oxidationskatalysator 29. Zwischen den beiden Katalysatoren ist eine Zufuhrstelle 24 zur Zugabe von Ammoniak in Form eines Injektors für eine Harnstoff Wasser-Lösung gespeist aus einem Reduktionsmitteltank 30 angeordnet. Diese Zufuhrstelle 24 wird über eine Kontrolleinheit 25 geregelt. Die Kontrolleinheit 25 hat hierbei beispielhaft die Eingangsgrößen des ersten Signals 17 (vgl. Fig. 3) vom ersten Stickstoffoxidsensor 26 in Abgasströmungsrichtung 31 vor dem SCR-Katalysator 23 und das zweite Signal 18 (vgl. Fig. 3) vom zweiten Stickstoffoxidsensor 26 stromabwärts des SCR-Katalysators 23. Weiterhin wird eine Eingangsgröße durch die Motorsteuereinheit 28 gebildet.

Durch das vorgeschlagene Verfahren und die entsprechenden Vorrichtungen ist es möglich, eine hochdynamische und effiziente Zufuhr von Reduktionsmittel in die Abgasbehandlungsvorrichtung zu regeln. Hierbei ist kein Ausgleich durch einen speicherfähigen SCR-Katalysator notwendig.

### Bezugszeichenliste

- 1: erstes Funktionsfeld
- 2: zweites Funktionsfeld
- 3: drittes Funktionsfeld
- 4: erste Umsatzratenvorgabe
- 5: zweite Umsatzratenvorgabe
- 6: dritte Umsatzratenvorgabe
- 7: Minimumoperator
- 8: Modusoperator
- 9: viertes Funktionsfeld
- 10: aktuell vorliegende Umsetzungsrate
- 11: Abweichung
- 12: Dosiermenge
- 13: fünftes Funktionsfeld
- 14: Dosiersignal
- 15: Lastwechselsignal
- 16: sechstes Funktionsfeld
- 17: erstes Signal
- 17.1: erstes Signal zum ersten Zeitpunkt Lastwechselsignal
- 18: zweites Signal
- 18.2: zweites Signal zum zweiten Zeitpunkt
- 19: erstes Zeitintervall
- 20: Abgasbehandlungsvorrichtung
- 21: Kraftfahrzeug
- 22: Verbrennungskraftmaschine
- 23: SCR-Katalysator
- 24: Zufuhrstelle
- 25: Kontrolleinheit
- 26: zweiter Stickstoffoxidsensor
- 27: erster Stickstoffoxidsensor
- 28: Motorsteuereinheit
- 29: Oxidationskatalysator
- 30: Reduktionsmitteltank
- 31: Abgasströmungsrichtung
- 32: Schaltmittel

- I: integrierender Regelanteil

## Patentansprüche

1. Verfahren zur Zugabe eines Reduktionsmittels in eine Abgasbehandlungsvorrichtung (20) mit einer Zufuhrstelle (24) und einem SCR-Katalysator (23) zur Umsetzung von Stickstoffoxidverbindungen im Abgas, aufweisend zumindest die folgenden Schritte:
a) Berechnen folgender Umsatzratenvorgaben, die angeben, welcher Anteil der im Abgas vorhandenen Stickstoffoxidverbindungen durch den SCR-Katalysator (23) umsetzbar ist:
a.1) eine erste Umsatzratenvorgabe (4), die aus der Leistungsabgabe einer angeschlossenen Verbrennungskraftmaschine (22) ermittelt wird;
a.2) eine zweite Umsatzratenvorgabe (5), die aus dem Massenstrom an Stickstoffoxidverbindungen in den gereinigten Abgasen ermittelt wird; und
a.3) eine dritte Umsatzratenvorgabe (6), die aus einem Verhältnis einer Menge von Stickstoffoxidverbindungen vor dem SCR-Katalysator (23) und einer Menge von Stickstoffoxidverbindungen hinter dem SCR-Katalysator (23) ermittelt wird;
b) Auswählen der niedrigsten Umsatzratenvorgabe (4, 5, 6)
c) Bestimmen einer Dosiermenge (12) an Reduktionsmittel mit der ausgewählten Umsatzratenvorgabe (4, 5, 6); und
d) Dosieren der bestimmten Dosiermenge (12) in die Abgasbehandlungsvorrichtung (20).

2. Verfahren nach einem der vorhergehenden Patentansprüche, wobei zur Berechnung der Umsetzungsratenvorgaben (4, 5, 6) in den Schritten a.1) bis a.3) zumindest folgende Parameter verwendet werden:
- zumindest eine Temperatur des SCR-Katalysators (23);
- zumindest eine Stickstoffkonzentration im Abgas;
- die Drehzahl der Verbrennungskraftmaschine (22); und
- das Drehmoment der Verbrennungskraftmaschine (22).

3. Verfahren nach einem der vorhergehenden Patentansprüche, wobei die Bestimmung der Dosiermenge (12) in Schritt c) mit einer Kontrolleinheit (25) durchgeführt wird, die einen integrierenden Regelanteil und einen proportionalen Regelanteil hat, wobei die durch den SCR-Katalysator aktuell vorliegende Umsetzungsrate (10) mit der ausgewählten Umsetzungsratenvorgabe (4,5,6) verglichen wird und eine Abweichung (11) bestimmt wird, die für die Bestimmung der Dosiermenge (12) verwendet wird.

4. Verfahren nach Patentanspruch 3, wobei die aktuell vorliegende Umsetzungsrate (10) aus einer Differenz eines zweiten Signals (18.2) eines zweiten Stickstoffoxidsensors (26) in Abgasströmungsrichtung hinter dem SCR-Katalysator (23) und eines ersten Signals (17.1) eines ersten Stickstoffoxidsensors (27) in Abgasströmungsrichtung (31) vor dem SCR-Katalysator (23) berechnet wird, wobei das erste Signal (17) um ein erstes Zeitintervall (19) vor dem zweiten Signal (18) bestimmt wird und das erste Zeitintervall (19) einer Strömungszeit des Abgases von dem ersten Stickstoffoxidsensor (27) zu dem zweiten Stickstoffoxidsensor (26) entspricht.

5. Verfahren nach Patentanspruch 3 oder 4, wobei die Kontrolleinheit (25) in einem statischen Modus und einem dynamischen Modus betreibbar ist, und für Schritt c) ein Gradient einer Stickstoffoxidmenge im Abgas vor dem SCR-Katalysator (23) berechnet wird, wobei die Kontrolleinheit (25) in dem dynamischen Modus betrieben wird, wenn der Gradient größer ist als ein Schwellwert, und der Regler (25) im statischen Modus betrieben wird, wenn der Gradient kleiner oder gleich dem Schwellwert ist, wobei die in Schritt b) ausgewählte Umsatzratenvorgabe (4, 5, 6) nur im dynamischen Modus verwendet wird und im statischen Modus für die Berechnung der Dosiermenge in Schritt c) eine vollständige Umsetzung der Stickstoffoxidverbindungen im Abgas angestrebt wird.

6. Verfahren nach einem der Patentansprüche 3 und 4, wobei der integrierende Regelanteil auf null zurückgesetzt wird, wenn eine an die Abgasbehandlungsvorrichtung angeschlossene Verbrennungskraftmaschine (22) einen Lastwechsel hat.

7. Verfahren nach einem der vorhergehenden Patentansprüche, wobei der SCR-Katalysator (23) eine Beschichtung aufweist, die unter üblichen Betriebsbedingungen des SCR-Katalysators (23) keine Speicherfähigkeit für Reduktionsmittel aufweist und kein zusätzlicher Speicherkatalysator für Reduktionsmittel in der Abgasbehandlungsvorrichtung (20) vorhanden ist.

8. Abgasbehandlungsvorrichtung (20) zur Reinigung der Abgase einer Verbrennungskraftmaschine (22) aufweisend:
- einen SCR-Katalysator (23) zur Durchführung einer selektiven katalytischen Reduktion von Stickstoffoxidverbindungen im Abgas;
- eine Zufuhrstelle (24) zur Zufuhr von Reduktionsmittel, welche in Abgasströmungsrichtung (31) vor dem SCR-Katalysator (23) angeordnet ist;
- einen zweiten Stickstoffoxidsensor (26) in Abgasströmungsrichtung hinter dem SCR-Katalysator (23); und
- eine Kontrolleinheit (25), die dazu eingerichtet ist, eine Zugabe von Reduktionsmittel an der Zufuhrstelle (24) zu regeln,
**dadurch gekennzeichnet, dass** die Kontrolleinheit (25) zur Durchführung eines Verfahrens nach einem der vorhergehenden Patentansprüche eingerichtet ist.

9. Kraftfahrzeug (21) aufweisend eine Verbrennungskraftmaschine (22) und eine Abgasbehandlungsvorrichtung (20) nach Patentanspruch 8 zur Reinigung der Abgase der Verbrennungskraftmaschine (22).

## Claims

1. Method for metering a reducing agent into an exhaust-gas treatment device (20) having a feed point (24) and having an SCR catalytic converter (23) for the conversion of nitrogen oxide compounds in the exhaust gas, having at least the following steps:
a) calculating the following setpoint conversion rates, which indicate what fraction of the nitrogen oxide compounds present in the exhaust gas can be converted by the SCR catalytic converter (23):
a.1) a first setpoint conversion rate (4) which is determined from the power output of a connected internal combustion engine (22);
a.2) a second setpoint conversion rate (5) which is determined from the mass flow of nitrogen oxide compounds in the purified exhaust gases; and
a.3) a third setpoint conversion rate (6) which is determined from a ratio between a quantity of nitrogen oxide compounds upstream of the SCR catalytic converter (23) and a quantity of nitrogen oxide compounds downstream of the SCR catalytic converter (23) ;
b) selecting the lowest setpoint conversion rate (4, 5, 6) ;
c) determining a dosing quantity (12) of reducing agent using the selected setpoint conversion rate (4, 5, 6); and
d) dosing the determined dosing quantity (12) into the exhaust-gas treatment device (20).

2. Method according to the preceding patent claim, wherein, for the calculation of the setpoint conversion rates (4, 5, 6) in steps a.1) to a.3), at least the following parameters are used:
- at least one temperature of the SCR catalytic converter (23);
- at least one nitrogen oxide concentration in the exhaust gas;
- the rotational speed of the internal combustion engine (22); and
- the torque of the internal combustion engine (22).

3. Method according to either of the preceding patent claims, wherein the determination of the dosing quantity (12) in step c) is performed by means of a control unit (25) which has an integral regulation component and a proportional regulation component, wherein the presently prevailing rate of conversion (10) by the SCR catalytic converter is compared with the selected setpoint conversion rate (4, 5, 6), and an error (11) is determined, which error is used for the determination of the dosing quantity (12).

4. Method according to Patent Claim 3, wherein the presently prevailing conversion rate (10) is calculated from a difference between a second signal (18.2) of a second nitrogen oxide sensor (26) downstream of the SCR catalytic converter (23) in the exhaust-gas flow direction and a first signal (17.1) of a first nitrogen oxide sensor upstream of the SCR catalytic converter (23) in the exhaust-gas flow direction (31), wherein the first signal (17) is determined before the second signal (18) by a first time interval (19), and the first time interval (19) corresponds to a flow time of the exhaust gas from the first nitrogen oxide sensor (27) to the second nitrogen oxide sensor (26).

5. Method according to Patent Claim 3 or 4, wherein the control unit (25) can be operated in a steady-state mode and in a dynamic mode, and for step c), a gradient of a nitrogen oxide quantity in the exhaust gas upstream of the SCR catalytic converter (23) is calculated, wherein the control unit (25) is operated in the dynamic mode if the gradient is greater than a threshold value, and the regulator (25) is operated in the steady-state mode if the gradient is less than or equal to the threshold value, wherein the setpoint conversion rate (4, 5, 6) selected in step b) is used only in the dynamic mode, and in the steady-state mode, for the calculation of the dosing quantity in step c), a complete conversion of the nitrogen oxide compounds in the exhaust gas is aimed for.

6. Method according to either of Patent Claims 3 and 4, wherein the integral regulation component is reset to zero if an internal combustion engine (22) connected to the exhaust-gas treatment device undergoes a load alteration.

7. Method according to one of the preceding claims, wherein the SCR catalytic converter (23) has a coating which, under normal operating conditions of the SCR catalytic converter (23), has no storage capacity for reducing agent, and no additional storage catalytic converter for reducing agent is provided in the exhaust-gas treatment device (20).

8. Exhaust-gas treatment device (20) for the purification of the exhaust gases of an internal combustion engine (22), having:
- an SCR catalytic converter (23) for performing a selective catalytic reduction of nitrogen oxide compounds in the exhaust gas;
- a feed point (24) for the feed of reducing agent, said feed point being arranged upstream of the SCR catalytic converter (23) in the exhaust-gas flow direction (31);
- a second nitrogen oxide sensor (26) downstream of the SCR catalytic converter (23) in the exhaust-gas flow direction; and
- a control unit (25) which is designed to regulate metering of reducing agent at the feed point (24),
**characterized in that** the control unit (25) is set up for carrying out a method according to one of the preceding patent claims.

9. Motor vehicle (21) having an internal combustion engine (22) and having an exhaust-gas treatment device (20) according to Patent Claim 8 for the purification of the exhaust gases of the internal combustion engine (22).

## Revendications

1. Procédé de dosage d'un agent de réduction dans un dispositif de traitement des gaz d'échappement (20) avec un point d'introduction (24) et un catalyseur SCR (23) pour la conversion de composés d'oxydes d'azote dans les gaz d'échappement, comprenant au moins les étapes suivantes:
a) calculer les prévisions suivantes de taux de conversion, qui indiquent quelle part des composés d'oxydes d'azote présents dans les gaz d'échappement peut être convertie par le catalyseur SCR (23):
a.1) une première prévision de taux de conversion (4), qui est déterminée à partir de la production de puissance d'un moteur à combustion interne raccordé (22),
a.2) une deuxième prévision de taux de conversion (5), qui est déterminée à partir du flux massique de composés d'oxydes d'azote dans les gaz d'échappement purifiés; et
a.3) une troisième prévision de taux de conversion (6), qui est déterminée à partir d'un rapport entre une quantité de composés d'oxydes d'azote avant le catalyseur SCR (23) et une quantité de composés d'oxydes d'azote après le catalyseur SCR (23);
b) sélectionner la prévision de taux de conversion (4, 5, 6) la plus basse;
c) déterminer une quantité de dosage (12) d'agent de réduction avec la prévision de taux de conversion sélectionnée (4, 5, 6); et
d) doser la quantité de dosage déterminée (12) dans le dispositif de traitement des gaz d'échappement (20).

2. Procédé selon l'une des revendications précédentes, dans lequel on utilise, pour le calcul des prévisions de taux de conversion (4, 5, 6) aux étapes a.1) à a.3), au moins les paramètres suivants:
- au moins une température du catalyseur SCR (23);
- au moins une concentration d'azote dans les gaz d'échappement;
- la vitesse de rotation du moteur à combustion interne (22); et
- le couple de rotation du moteur à combustion interne (22).

3. Procédé selon l'une des revendications précédentes, dans lequel on effectue la détermination de la quantité de dosage (12) à l'étape c) avec une unité de contrôle (25), qui comporte une part de régulation intégrale et une part de régulation proportionnelle, dans lequel on compare le taux de conversion actuellement existant (10) parle catalyseur SCR avec la prévision de taux de conversion sélectionnée (4, 5, 6) et on détermine un écart (11), que l'on utilise pour la détermination de la quantité de dosage (12).

4. Procédé selon la revendication 3, dans lequel on calcule le taux de conversion actuellement existant (10) à partir d'une différence entre un deuxième signal (18.2) d'un deuxième détecteur d'oxydes d'azote (26) situé en aval du catalyseur SCR (23) dans la direction d'écoulement des gaz d'échappement et un premier signal (17.1) d'un premier détecteur d'oxydes d'azote (27) situé en amont du catalyseur SCR (23) dans la direction d'écoulement des gaz d'échappement (31), dans lequel on détermine le premier signal (17) à un premier intervalle de temps (19) avant le deuxième signal (18) et le premier intervalle de temps (19) correspond à un temps d'écoulement des gaz d'échappement du premier détecteur d'oxydes d'azote (27) au deuxième détecteur d'oxydes d'azote (26).

5. Procédé selon la revendication 3 ou 4, dans lequel l'unité de contrôle (25) peut opérer dans un mode statique et dans un mode dynamique, et on calcule pour l'étape c) un gradient d'une quantité d'oxydes d'azote dans les gaz d'échappement avant le catalyseur SCR (23), dans lequel l'unité de contrôle (25) opère dans le mode dynamique lorsque le gradient est supérieur à une valeur de seuil, et le régulateur (25) opère dans le mode statique lorsque le gradient est inférieur ou égal à la valeur de seuil, dans lequel on n'utilise la prévision de taux de conversion (4, 5, 6) sélectionnée à l'étape b) que dans le mode dynamique et dans le mode statique on vise à l'étape c) une conversion totale des composés d'oxydes d'azote dans les gaz d'échappement pour le calcul de la quantité de dosage.

6. Procédé selon une des revendications 3 ou 4, dans lequel la partie de régulation intégrale est ramenée à zéro, lorsqu'un moteur à combustion interne (22) raccordé au dispositif de traitement des gaz d'échappement présente un changement de charge.

7. Procédé selon une des revendications précédentes, dans lequel le catalyseur SCR (23) présente un revêtement qui dans des conditions usuelles de fonctionnement du catalyseur SCR (23) ne présente aucune capacité d'accumulation pour l'agent de réduction et aucun catalyseur à accumulation supplémentaire pour l'agent de réduction n'est présent dans le dispositif de traitement des gaz d'échappement (20).

8. Dispositif de traitement des gaz d'échappement (20) pour la purification des gaz d'échappement d'un moteur à combustion interne (22), présentant:
- un catalyseur SCR (23) pour effectuer une réduction catalytique sélective de composés d'oxydes d'azote dans les gaz d'échappement;
- un point d'introduction (24) pour l'introduction d'agent de réduction, qui est disposé en amont du catalyseur SCR (23) dans la direction d'écoulement des gaz d'échappement (31);
- un deuxième détecteur d'oxydes d'azote (26) situé en aval du catalyseur SCR (23) dans la direction d'écoulement des gaz d'échappement; et
- une unité de contrôle (25), qui est conçue pour réguler une addition d'agent de réduction au point d'introduction (24),
**caractérisée en ce que** l'unité de contrôle (25) est conçue pour la mise en oeuvre d'un procédé selon l'une quelconque des revendications précédentes.

9. Véhicule automobile (21) présentant un moteur à combustion interne (22) et un dispositif de traitement des gaz d'échappement (20) selon la revendication 8 pour la purification des gaz d'échappement du moteur à combustion interne (22).
